# EUROPEAN PATENT APPLICATION

(11) **EP 1 318 489 A2**
(43) Date of publication of application: **11.06.2003**
(21) Application number: 02258286.0
(22) Date of filing: 02.12.2002
(51) Int. Cl.: G07G 1/14

(54) **Clustering of retail terminals**

(30) Priority: 06.12.2001 US 10983
(71) Applicant: NCR INTERNATIONAL INC., Dayton, Ohio 45479 (US)
(72) Inventor: Benson, Christoher Michael, Lawrenceville, GA 30043 (US)
(74) Representative: Williamson, Brian

(57) **Abstract**

The invention provides a multi-processor data processing system comprising: (a) the processors of a plurality of point-of-sale terminals, and (b) a control processor; wherein the said processors of the plurality of point-of-sale terminals are interconnected in a network and are operable, under the control of the control processor, to concertedly perform data processing operations on bulk data, the said bulk data being subdivided; by the control processor, for processing by the individual processors of the plurality of point-of-sale terminals. The invention also provides a method of processing a bulk data set using a plurality of point-of-sale processors, and advantageously enables the processing power of interconnected point-of-sale terminals to be used as an high-capacity data processing resource.

## Description

This invention relates to the clustering of point-of-sale retail terminals, and a method of using a plurality of interconnected retail terminals to perform processing functions.

Supermarkets and other retail outlets have an increasing need for a high capacity data processing capability. An example of an application involving high capacity data processing is retail trend analysis. This has recently become a significant issue in the retail industry. By processing customers' purchase histories and trends (e.g. as recorded through customer loyalty card schemes) it is possible for a store to better predict and cater for the shopping habits of their customers. This in turn gives rise to better and more efficient product ordering, optimization of pricing, and more efficient staff deployment. Trend analysis may also be used to predict when sales may drop, and hence recommend to managers appropriate times for in-store promotions.

Trend analyses as described above require a significant large-scale computer processing capability, such as is conventionally found in supercomputers or mainframes. Conventional personal computers are typically not sufficiently fast or powerful.

However, owning such large-scale systems is not usually possible for smaller stores or chains of stores. This results in them potentially missing out on trend analyses, and consequently being placed at a disadvantage in what may well be a highly competitive retail market.

Accordingly, it is a general object of the present invention to overcome or at least mitigate the problems experienced by stores as identified above.

According to a first aspect of the invention there is provided a multi-processor data processing system comprising: (a) the processors of a plurality of point-of-sale terminals, and (b) a control processor; wherein the said processors of the plurality of point-of-sale terminals are interconnected in a network and are operable, under the control of the control processor, to concertedly perform data processing operations on bulk data, the said bulk data being subdivided; by the control processor, for processing by the individual processors of the plurality of point-of-sale terminals.

According to a second aspect of the invention there is provided a method of processing a bulk data set comprising: (a) operating a control processor to subdivide the bulk data set into subdivisions of data; (b) operating the control processor to send the subdivisions of data to a plurality of processors, the processors being those of a plurality of point-of-sale terminals connected to the control processor via a network; and (c) operating the processors of the plurality of point-of-sale terminals to process the said data.

Preferably the processors used for data processing in step (c) are selected for data processing by the control processor on the criterion that, prior to the commencement of the said data processing in step (c), they were substantially idle.

Preferably the method further comprises sending the results of the data processing to the control processor, from the processors of the plurality of point-of-sale terminals.

Preferably the method further comprises interrupting the data processing of step (c) of a specific point-of-sale terminal on the criterion of that terminal being required to perform a retail transactions.

The invention advantageously enables the processing power of interconnected point-of-sale terminals in a store (or distributed between a plurality of stores) to be used as a high-capacity data processing resource. Presently, in retail outlets, only a small fraction of the total processing capacity of the point-of-sale terminals is typically being used at any one time for handling retail transactions. Additionally, many stores leave their point-of-sale terminals operating during the night, either to receive configuration updates or simply to ensure that they are ready for operation the following morning without the store personnel having to power them up. Accordingly, therefore, during the night there is a substantial latent processing capability that is hitherto untapped, and the present invention provides a method by which this processing capability may be put to better use.

A further advantage associated with the present invention is that a network infrastructure and interconnected point-of-sale terminals are already present in many stores, thereby facilitating the implementation of the invention.

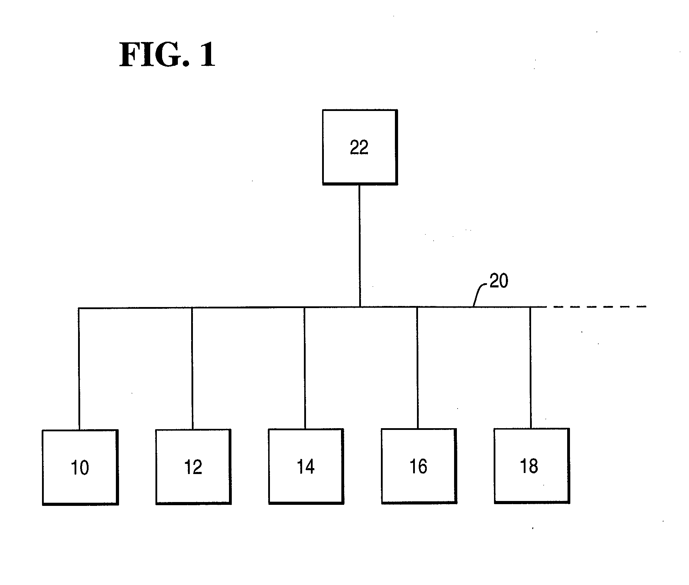

Embodiments of the invention will now be described, by way of example, and with reference to the drawing in which: Figure 1 illustrates a network of point-of-sale terminals in which the processors are interconnected, and controlled by a control processor.

An example of a network of point-of-sale (POS) terminals in accordance with the invention is shown in Figure 1. In this network, POS processors 10, 12, 14, 16, 18 are directly connected by a data communications network 20. Also connected to the network is a control processor 22, which is envisaged to be incorporated in a "back office" terminal such as a personal computer (PC). However, the control processor could itself be in one of the POS terminals.

Any number of interconnected processors of POS terminals is possible, within the reasonable limits as will be appreciated by those skilled in the art. Although five POS processors are shown in the Figure, it is envisaged that larger stores may use many tens or even hundreds of processors that may be connected in this manner.

The network 20 may be local (i.e. within a given store) or may extend over a wide area (i.e. covering a plurality of stores). With a wide area network, part of the infrastructure may be provided by the Internet.

In use, the back office control processor 22 may be given a high-capacity data processing operation to perform on bulk data. Typically, this bulk data would be the store's sales records and its customers' purchase histories and trends. For some stores, this would include many thousands, and possibly millions, of items of data.

Having received this bulk data, the back office control processor 22 sub-divides and distributes the data to each of the available POS terminal processors 10, 12, 14, 16, 18 and so on. Each POS processor then processes the batch of data that has been allocated to it, and returns the results to the control processor 22.

The operation of the plurality of POS processors is effectively that of a clustered system of processors. The Linux operating system is well suited to the control of clustered processors. Windows machines utilizing DCOM add-ons could also accomplish the same thing. With the POS terminal processors being clustered under the control of the back office control processor 22, the POS processors are thereby configured to operate in a concerted manner in order to process the large data sets in question. That is to say, the net result of clustering the processors is that they behave as one high-capacity processing system.

In a preferred embodiment of the invention, the back office control processor only includes a POS processor in a bulk data processing operation if it is substantially idle - that is to say, it is not being used for a retail transaction, or any other customer service operation. If such a processor is in use serving customers, then it is not involved in the clustered multi-processor data processing operation. Furthermore, if a processor is being used for bulk data processing in a clustered environment, and the retail terminal in which it is located is required to serve a customer, then that processor's share of the bulk data processing is temporarily suspended, or the data is passed to another processor so that the processing operation may be completed. It is important to emphasize that, when a processor is suddenly utilized to perform a transaction with a customer, the other clustered retail terminals continue processing the bulk data.

## Claims

1. A multi-processor data processing system comprising:
(a) the processors of a plurality of point-of-sale terminals, and
(b) a control processor;
wherein the said processors of the plurality of point-of-sale terminals are interconnected in a network and are operable, under the control of the control processor, to concertedly perform data processing operations on bulk data, the said bulk data being subdivided into subdivisions of data by the control processor, for processing by the individual processors of the plurality of point-of-sale terminals.

2. A method of processing a bulk data set comprising:
(a) operating a control processor to subdivide the bulk data set into subdivisions of data;
(b) operating the control processor to send the subdivisions of data to a plurality of processors, the processors being those of a plurality of point-of-sale terminals connected to the control processor via a network; and
(c) operating the processors of the plurality of point-of-sale terminals to process the said data.

3. A method of processing a bulk data set as claimed in Claim 2, wherein the processors used for data processing in step (c) are selected for data processing by the control processor on the criterion that, prior to the commencement of the said data processing in step (c), they were substantially idle.

4. A method of processing a bulk data set as claimed in Claim 2, further comprising sending the results of the data processing to the control processor, from the processors of the plurality of point-of-sale terminals.

5. A method of processing a bulk data set as claimed in any of Claims 2 to 4, further comprising interrupting the data processing of step (c) of a specific point-of-sale terminal on the criterion of that terminal being required to perform a retail transactions.
